(19) Europäisches Patentamt / European Patent Office / Office européen des brevets

(11) **EP 4 682 771 A1**

(12) **EUROPEAN PATENT APPLICATION**
published in accordance with Art. 153(4) EPC

(43) Date of publication:
**21.01.2026 Bulletin 2026/04**

(21) Application number: **25754602.8**

(22) Date of filing: **10.02.2025**

(51) International Patent Classification (IPC):
***G06N 3/096*** (2023.01)

(52) Cooperative Patent Classification (CPC):
**G06N 3/096**

(86) International application number:
**PCT/KR2025/001944**

(87) International publication number:
**WO 2025/174015 (21.08.2025 Gazette 2025/34)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **14.02.2024 KR 20240021052**
**28.05.2024 KR 20240069432**

(71) Applicant: **LG Management Development Institute Co., Ltd.**
**Seoul 07336 (KR)**

(72) Inventors:
• **LEE, Changho**
**Seoul 00788 (KR)**
• **HAN, Janghoon**
**Seoul 04315 (KR)**

(74) Representative: **BCKIP Part mbB**
**MK1**
**Landsbergerstraße 98, 3.Stock**
**80339 München (DE)**

(54) **SYSTEM, METHOD, AND PROGRAM FOR CONSTRUCTING DATA SET FOR AI MODEL TRAINING THROUGH INSTRUCTION TUNING**

(57) A system, method, and program for constructing a data set that improves zero-shot learning performance of an AI model through instruction tuning are disclosed. The method includes extracting instructions from each of a training task used for training an AI model, and a target task that is a task to be trained through the training task, evaluating similarity by comparing the extracted instruction of the training task with the extracted instruction of the target task, selecting, from among the extracted instructions of the training task, instructions having a similarities equal to or greater than a predetermined value, and outputting the selected instructions of the training task as a data set.

FIG. 3

**Description**

[Technical Field]

The present invention relates to a system, method, and program for constructing a data set for training an AI model through instruction tuning, and more particularly, to the system, method, and program for constructing the data set that improves the zero-shot learning performance of the AI model through the instruction tuning.

[Background Art]

In recent studies, instruction tuning has been established as a key approach to improve zero-shot learning performance.

Zero-shot learning means that an AI model has a certain level of understanding and performance capability when an unseen task is presented in a situation where the model has never trained a specific task. A key factor that enables the zero-shot learning is the model's ability to understand a structure of data used during training and abstract the structure to generalize. For example, in the case of language models, by understanding instructions or instances included in tasks used for training and learning them as abstract concepts, the model can interpret and perform tasks even when unseen tasks are given.

To improve zero-shot learning capability, it is important to train various tasks, but it is also important to select and train training tasks having relevance to each target task. This is because training with the training tasks having no relevance to the target task may cause negative transfer, thereby degrading performance of the AI model.

Recently, as a method of the instruction tuning, a method (model transferability method) has been proposed, in which a target task is input to a model trained through training tasks to evaluate its performance, and the training tasks exhibiting high performance are evaluated as having high similarity to the target task and are selected to construct a data set for AI training (Taskweb: Selecting better 662 source tasks for multitask NLP, Joongwon Kim 외 3 명, 2023). However, the method has the disadvantage of requiring excessive computing resources because it needs to use all instructions (including definitions of tasks} and instances included in tasks and requires additional model training for similarity evaluation.

As another method of the instruction tuning, a method has been proposed, in which some data from a target task is extracted as samples, similarity between the extracted target task and training tasks is measured, and the training tasks having high similarities are selected to construct a data set (Exploring the benefits of training expert language models over instruction tuning, Joel Jang et al., 2023). However, the method has the limitation in ensuring strict zero-shot performance because it uses the target task extracted as the samples, and still has the limitation that excessive computing resources may be required depending on the number of samples in that it uses all instructions and instances included in the task.

(Non-Patent Document 1) Taskweb: Selecting better 662 source tasks for multitask NLP, Joongwon Kim et al., 2023.
(Non-Patent Document 2) Exploring the benefits of training expert language models over instruction tuning, Joel Jang et al., 2023.

[Disclosure]

[Technical Problem]

The problem to be solved by the present invention is to provide a system, method, and program for constructing a data set that improves zero-shot learning performance of an AI model through instruction tuning.

The technical problems to be solved by the present invention are not limited to the above-described objects, and other technical problems not mentioned herein will become more apparent to those skilled in the art from the following description.

[Technical Solution]

The system for constructing a dataset according to the present invention includes at least one processor, and a memory storing one or more commands, wherein the at least one processor executes the one or more commands stored in the memory to perform extracting instructions from each of a training task used for training an AI model and a target task that is a task to be trained through the training task, evaluating similarity by comparing the extracted instruction of the training task with the extracted instruction of the target task, selecting, from among the extracted instructions of the training task, instructions having similarities equal to or greater than a predetermined value, and outputting the selected instructions of the training task as a data set.

In the system, the evaluating of the similarity may include representing the extracted instruction of the training task and the extracted instruction of the target task as vectors, and performing evaluation through cosine similarity that compares directional similarity between the two vectors.

In the system, the evaluating of the similarity may evaluate the similarity through a model transfer method, wherein the model transfer method may include training a model transfer AI model with any one of the extracted instructions of the training task, inputting a plurality of the extracted instructions of the target task to the model transfer AI model to evaluate performance of the model transfer AI model, and assigning a high similarity to the extracted instruction of the target task for which the model transfer AI model exhibits high performance and to the extracted instruction of the training task used for training the model transfer AI model.

In the system, the evaluating of the similarity may be performed by a task selector model that has been pre-tuned for evaluating the similarity, wherein the pre-tuning for evaluating the similarity may include selecting any one of a plurality of the target tasks as a first task, extracting a first instruction from the first task and designating the first instruction as a positive sample, selecting any other one of the plurality of the target tasks other than the first task as a second task, extracting a second instruction from the second task and designating the second instruction as a negative sample, assigning similarity scores to the positive sample and the negative sample, and training the task selector model using the positive sample and the negative sample including the similarity scores.

In the system, the assigning of the similarity scores to the positive sample and the negative sample may include assigning a similarity score of "1" to the positive sample and assigning a similarity score of "0" to the negative sample.

In the system, the extracting of the instructions may further include unifying placeholders included in the extracted instruction of the training task and the extracted instruction of the target task into specific terms.

A method for constructing a dataset according to another aspect of the present invention, which is a method for generating prediction data, performed by at least one processor, may include extracting instructions from each of a training task used for training an AI model and a target task that is a task to be trained through the training task, evaluating similarity by comparing the extracted instruction of the training task with the extracted instruction of the target task, selecting, from among the extracted instructions of the training task, instructions having similarities equal to or greater than a predetermined value, and outputting the selected instructions of the training task as a data set.

In the method, the evaluating of the similarity may include representing the extracted instruction of the training task and the extracted instruction of the target task as vectors, and performing evaluation through cosine similarity that compares directional similarity between the two vectors.

In the method, the evaluating of the similarity may evaluate the similarity through a model transfer method, wherein the model transfer method may include training a model transfer AI model with any one of the extracted instructions of the training task, inputting a plurality of the extracted instructions of the target task to the model transfer AI model to evaluate performance of the model transfer AI model, and assigning a high similarity to the extracted instruction of the target task for which the model transfer AI model exhibits high performance and to the extracted instruction of the training task used for training the model transfer AI model.

In the method, the evaluating of the similarity may be performed by a task selector model that has been pre-tuned for evaluating the similarity, wherein the pre-tuning for evaluating the similarity may include selecting any one of a plurality of the target tasks as a first task, extracting a first instruction from the first task and designating the first instruction as a positive sample, selecting any other one of the plurality of the target tasks other than the first task as a second task, extracting a second instruction from the second task and designating the second instruction as a negative sample, assigning similarity scores to the positive sample and the negative sample, and training the task selector model using the positive sample and the negative sample including the similarity scores.

In the method, the assigning of the similarity scores to the positive sample and the negative sample may include assigning a similarity score of "1" to the positive sample and assigning a similarity score of "0" to the negative sample.

In the method, the extracting of the instructions may further include unifying placeholders included in the extracted instruction of the training task and the extracted instruction of the target task into specific terms.

A program according to still another aspect of the present invention may be a program stored in a computer-readable recording medium to execute the method for constructing data set according to embodiments of the present invention on a computer.

[Advantageous Effects]

According to the present invention, computing resource utilization efficiency can be improved and zero-shot learning capability can be enhanced, by providing a simple and effective method for selecting training tasks related to a target task.

In addition, according to the present invention, similarity between instructions of the target tasks and instructions of the training tasks can be more accurately evaluated by additionally training a task selector model that evaluates the similarity, and furthermore, overall performance of a model can be improved by increasing the accuracy of training task selection.

In addition, according to the present invention, a negative effect of a placeholder on AI model training can be prevented by unifying the placeholder included in an extracted instruction into a specific term, thereby improving zero-shot performance.

The effects of the present invention are not limited to the above-described effects, and other effects not mentioned herein will be clearly understood by those skilled in the art from the following description.

[Description of Drawings]

FIG. 1 is a schematic diagram of a system for implementing a method for constructing a data set that improves zero-shot learning performance of an AI model through instruction tuning, according to one embodiment of the present disclosure.

FIG. 2 is a block diagram for explaining a configuration of a device for constructing the data set that improves the zero-shot learning performance of the AI model through the instruction tuning, according to one embodiment of the present disclosure.

FIG. 3 is a block diagram for explaining the method for constructing the data set that improves the zero-shot learning performance of the AI model through the instruction tuning, according to embodiments of the present invention.

FIG. 4 shows results of evaluating the zero-shot learning performance of the data set constructed according to embodiments of the present invention.

FIG. 5 shows results of evaluating the zero-shot learning performance of a data set in which instructions of training tasks are selected based on similarity of the top nth (where n is 1, 3, 5, or 10) rank or higher, according to embodiments of the present invention.

FIG. 6 is a block diagram for explaining a method of evaluating similarity using a task selector model that has been pre-tuned, according to embodiments of the present invention.

FIG. 7 is code representing data including placeholders.

[Modes of the Invention]

The following embodiments are provided as examples so that the spirit of the present invention can be sufficiently conveyed to those skilled in the art to which the present invention pertains. Therefore, the present invention is not limited to the embodiments described below and may be specified in other forms.

The same reference numerals refer to the same components throughout the present invention. The present invention does not describe all elements of the embodiments, and common content in the art to which the present invention pertains or content that overlaps between the embodiments will be omitted. Terms such as 'unit,' 'module,' 'member,' and 'block' used in the specification may be implemented as software or hardware, and according to the embodiments, a plurality of 'units,' 'modules,' 'members,' and 'blocks' may be implemented as one component, or one "unit," 'unit,' 'module,' 'member,' and 'block' may also include a plurality of components.

Throughout the specification, when a first component is described as being "connected" to a second component, this includes not only a case in which the first component is directly connected to the second component but also a case in which the first component is indirectly connected to the second component, and the indirect connection includes connection through a wireless communication network.

In addition, when a certain portion is described as "including" a certain component, it means further including other components rather than precluding other components unless specifically stated otherwise.

Throughout the present specification, when a first member is described as being positioned "on" a second member, this includes both a case in which the first member is in contact with the second member and a case in which a third member is present between the two members.

Terms such as first and second are used to distinguish one component from another, and the components are not limited by the above-described terms.

A singular expression includes plural expressions unless the context clearly dictates otherwise.

In each operation, identification symbols are used for convenience of explanation, and the identification symbols do not describe the order of each operation, and each operation may be performed in a different order from the specified order unless a specific order is clearly described in context.

A system for constructing a data set that improves zero-shot learning performance of an AI model through instruction tuning according to the present invention may include a device, and the device may include all types of devices capable of performing computation processing and providing results to a user. For example, the system for constructing the data set that improves the zero-shot learning performance of the AI model through the instruction tuning according to the present invention may include at least one of a computer, a server device, and a portable terminal, or may be implemented in any one form having the same or similar functions thereof. However, the present invention is not limited thereto.

Here, the computer may include, for example, a notebook, a desktop, a laptop, a tablet PC, a slate PC, etc., which are equipped with a web browser.

The server device is a server that processes information in communication with an external device, and may include an application server, a computing server, a database server, a file server, a game server, a mail server, a proxy server, and a web server.

The portable terminal is, for example, a wireless communication device ensuring portability and mobility and may include all kinds of handheld-based wireless communication devices such as a personal communication system (PCS), a global system for mobile communications (GSM), a personal digital cellular (PDC), a personal handyphone system (PHS), a personal digital assistant (PDA), international mobile telecommunication-2000 (IMT-2000), code division multiple access-2000 (CDMA-2000), w-code division multiple access (W-CDMA), a wireless broadband internet (WiBro) terminal, a smart phone, and wearable devices such as a watch, a ring, a bracelet, an anklet, a necklace, glasses, contact lenses, or a head-mounted device (HMD).

Hereinafter, embodiments of the present invention will be described in detail with reference to the accompanying drawings.

The present invention relates to a system, method, and program for constructing a data set for training an AI model through instruction tuning, and more particularly, to the system, method, and program for constructing the data set that improves the zero-shot learning performance of the AI model through the instruction tuning.

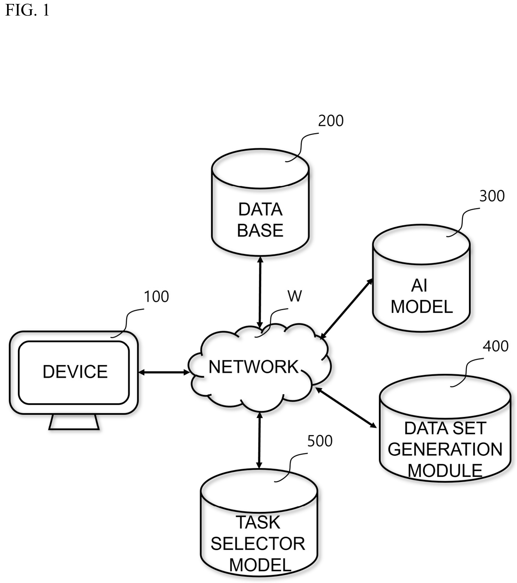

FIG. 1 is a schematic diagram of a system for constructing the data set for training the AI model through the instruction tuning according to one embodiment of the present invention.

As shown in FIG. 1, a system 1000 may include a device 100, a database 200, an AI model 300, a data set generation module 400, and a task selector model 500.

The device 100, the database 200, the AI model 300, the data set generation module 400, and the task selector model 500, which are included in the system 1000 may perform communication via a network W. Here, the network W may include a wired network and a wireless network. For example, the network may include various networks such as a local area network (LAN), a metropolitan area network (MAN), and a wide area network (WAN).

In addition, the network W may also include the well-known world wide web (WWW). However, the network W according to an embodiment of the present invention is not limited to the above-listed networks and may include, at least in part, a well-known wireless data network, a well-known telephone network, or a well-known wired and wireless television network.

The device 100 may input the data set generated by the data set generation module 400 into the AI model 300 or the task selector model 500 to perform training of the AI model 300 or the task selector model 500.

The data set generation module 400 may generate the data set 410 through data output through the instruction tuning. The data set 410 is the same as what is generally used for training the AI model or evaluating its performance, and more preferably, may be the data set with improved zero-shot learning performance according to the present invention, but is not limited thereto. The data set generated through the data set generation module 400 is composed of instructions extracted from training tasks that exhibit similarities equal to or greater than a predetermined value in similarity evaluation with instructions of a target task. Here, the instructions includes directives, information, or definitions of tasks (e.g., "Perform translation"), which are necessary to perform tasks, and an instance includes input data or examples (e.g., specific documents to be translated) used for model training.

The database 200 may store various types of data (e.g., data sets) for training or evaluating the performance of the AI model 300. In addition, the database 200 may store the training tasks including the instructions and instances and the target tasks including the instructions and the instances, and in various embodiments, may also store output data set output by the AI model 300. However, the system 1000 may not include the database 200 when the training of the AI model 300 is completed.

FIG. 1 shows a case in which the database 200 is implemented outside the device 100. In this case, the database 200 may be connected to the device 100 in a wired or wireless communication manner. However, this is only one embodiment, and the database 200 may also be implemented as one component of the device 100.

FIG. 1 shows a case in which the AI model 300 is implemented outside the device 100 (e.g., implemented in a cloud-based manner), but is not limited thereto, and may be implemented as one component of the device 100.

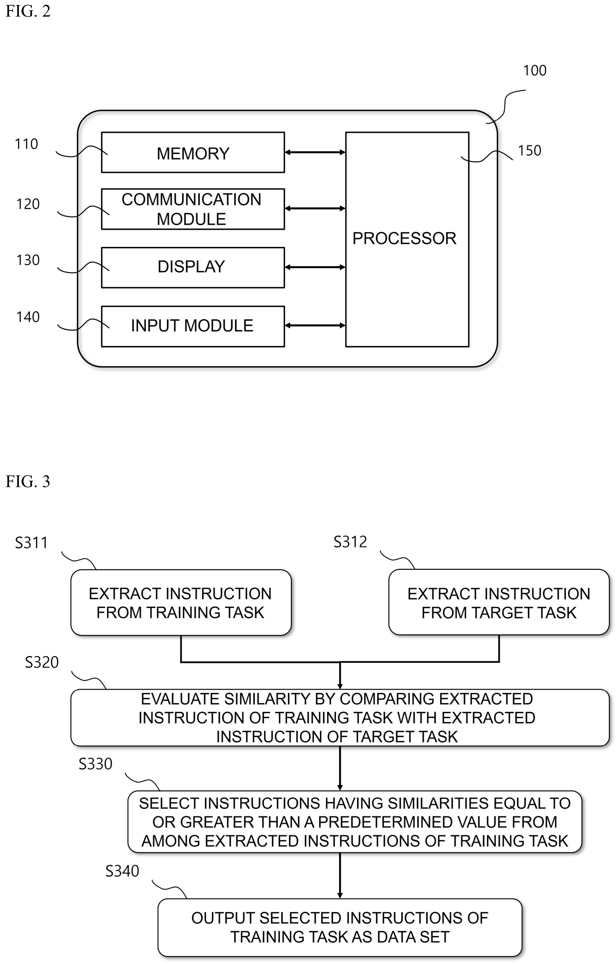

FIG. 2 is a block diagram for explaining a configuration of a device for constructing the data set for training the AI model through the instruction tuning, according to one embodiment of the present invention.

As shown in FIG. 2, the device 100 may include a memory 110, a communication module 120, a display 130, an input module 140, and a processor 150. However, the present invention is not limited thereto, and software and hardware components of the device 100 may be modified/added/omitted according to a required operation within a scope obvious to those skilled in the art. In addition, the device 100 may be replaced with a system, and the device 100 may include a plurality of devices, and in this case, each component included in the device 100 may be included in at least one of the plurality of devices.

The memory 110 may store data supporting various functions of the device 100 and a program for the operation of the processor 150, store input/output data, and store a plurality of application programs or applications that are driven on the present device, data, command, and the AI model for the operation of the device 100. At least some of the application programs may be downloaded from an external server via wireless communication.

Such memory 110 may include at least one type of storage medium among a flash memory type, a hard disk type, a solid state disk type (SSD type), a silicon disk drive type (SDD type), a multimedia card micro type, a card-type memory (e.g., an SD or XD memory), a random access memory (RAM), a static random access memory (SRAM), a read-only memory (ROM), an electrically erasable programmable ROM (EEPROM), a programmable ROM (PROM), a magnetic memory, a magnetic disk, and an optical disk.

In addition, the memory 110 may be separate from the device, and may include a database that is connected in a wired or wireless communication manner. The database 200 shown in FIG. 1 may be implemented as one component of the memory 110.

The communication module 120 may include one or more components that enable communication with an external device, and may include at least one of, for example, a broadcasting reception module, a wired communication module, a wireless communication module, a short-range communication module, or a position information module.

The wired communication module may include not only various wired communication modules such as a local area network (LAN) module, a wide area network (WAN) module, and a value added network (VAN) module, but also various cable communication modules such as a universal serial bus (USB), a high definition multimedia interface (HDMI), a digital visual interface (DVI), a recommended standard 232 (RS-232), power line communication, and plain old telephone service (POTS).

In addition to the WiFi module and the wireless broadband (WiBro) module, the wireless communication module may include a wireless communication module for supporting various wireless communication methods such as global system for mobile communication (GSM), code division multiple access (CDMA), wideband CDMA (WCDMA), universal mobile telecommunications system (UMTS), time division multiple access (TDMA), long term evolution (LTE), 4G, 5G, or 6G.

The display 130 displays (outputs) information or data that are processed in the device 100, data that are input or output through the AI model 300, etc. In addition, the display 130 may display execution screen information of an application program (e.g., an application) driven on the device 100, or user interface (UI) or graphic user interface (GUI) information according to such execution screen information.

The input module 140 is for receiving information from a user, and when the user inputs information through an input unit, the processor 150 may control the operation of the device 100 to correspond to the input information.

The input module 140 may include a hardware physical key (e.g., a button located on at least one of a front surface, a back surface, and a side surface of the device, a dome switch, a jog wheel, a jog switch, etc.) and a software touch key. As an example, the touch key may be formed as a virtual key, a soft key, or a visual key that is displayed on a touchscreen type of the display 130 through software processing or may be formed as the touch key disposed in a portion other than the touchscreen. Meanwhile, the virtual key or visual key may have various forms and may be displayed on the touchscreen, and may be formed as, for example, a graphic, text, an icon, a video, or a combination thereof.

The processor 150 may be implemented with a memory that stores data for an algorithm for controlling the operations (including training or execution of the AI model) of the components in the device 100 or a program that reproduces the algorithm, and at least one processor (not shown) that performs the above-described operation using the data stored in the memory. In this case, the memory and the processor may each be implemented as separate chips or may be implemented as a single chip.

In one embodiment, the system 1000 or the device 100 according to the present invention may include at least one processor, and when including a plurality of processors, the plurality of processors may be included in different devices 100.

In addition, the processor 150 may control the operations of the components by combining any one or a plurality of the above-described components in order to implement various embodiments according to the present disclosure, which will be described below, on the device 100.

FIG. 3 is a block diagram for explaining the method for constructing the data set that improves the zero-shot learning performance of the AI model through the instruction tuning, according to an embodiment of the present invention.

Referring to FIG. 3, instructions are extracted from each of training tasks that are data used for training the AI model and a target task that is information about a task to be trained by the AI model through the training tasks (S311 and S312). The training tasks and the target task may have been stored in the memory 110 of the device 100, but are not limited thereto. The training tasks and the target task each includes the instructions and instances. Here, the instructions include directives, information, definitions of tasks, etc., which are necessary to perform the tasks, and the instances include input data or examples used for model training. For example, in a case of a task called 'Sentiment Analysis,' the instruction may be "Determine whether the sentiment expressed in the given text is positive, negative, or neutral," and the instance may be "I really enjoyed this movie! (positive sentiment expression)." In addition, in a case of a task called 'Text Classification," the instruction may be "Classify news articles into categories such as politics, sports, entertainment, or technology," and the instance may be a 'sports article.' In addition, in a case of a task called 'Question Answering (QA),' the instruction may be "Provide a correct answer based on information for the given text and a question related to the text," and the instance may be "Who is the author of the Harry Potter series? (question) J.K. Rowling (answer)." In addition, in a case of a task called 'Text Summarization,' the instruction may be "Generate a concise and coherent summary while maintaining the main information and topic of a long text document," and the instance may be 'an article about today's weather.' In addition, in a case of a task called 'Named Entity Linking (NEL),' the instruction may be "Link entities recognized in the text to corresponding entries in a knowledge base or a database to provide additional context and information," and the instance may be "Jeju Island is an island in South Korea." (entity: Jeju Island, link: island in South Korea).

Next, similarity is evaluated by comparing the extracted instruction of the training task with the extracted instruction of the target task (S320).

As an example of a method for evaluating the similarity, cosine similarity may be used. The cosine similarity is a method for measuring similarity between two vectors in a vector space, and refers to a method of calculating similarity by measuring how similar directions of the two vectors are. The cosine similarity uses how 'similar' directions the two vectors have. More specifically, the cosine similarity is defined as follows.

$$\text{Cosine Similarity}(A, B) = \frac{A \cdot B}{\|A\|\|B\|}$$

Values of the cosine similarity range from -1 to 1, where a value closer to 1 indicates that the directions of the two vectors are similar and a value closer to -1 indicates that the directions of the two vectors are opposite. For example, when a value is 0, it can be determined that the two vectors are orthogonal (90-degree angle) and have no directional similarity. In the present invention, each of the extracted instruction of the training task and the extracted instruction of the target task may be represented as a vector, and the similarity may be calculated using the two vectors.

In addition, as another example of a method for evaluating the similarity, model transfer may be used. A method of calculating similarity through the model transfer refers to a method of calculating similarity in a manner of evaluating performance by training a model with the extracted instruction of the training task and by inputting the extracted instruction of the target task into the trained model. Specifically, when the extracted instruction of the target task is input into the trained model, the higher the performance exhibited, the higher the similarity may be evaluated between the extracted instruction of the target task and the extracted instruction of the training task. That is, high similarities are assigned to the extracted instructions of the target tasks and the extracted instructions of the training tasks in the order of exhibiting high performance values when the extracted instruction of the target task is input into the trained model.

Here, accuracy, loss function, and the like may be used as indicators for measuring the performance values of the model.

The accuracy represents a ratio of samples that the model correctly classified and may be calculated as follows.

$$Accuracy = \frac{the\ number\ of\ correctly\ classified\ samples}{the\ total\ number\ of\ samples}$$

For example, when the extracted instructions of the target task are input into the trained model, the accuracy may be calculated by dividing the number of samples for which correct results are output by the total number of the extracted instructions of the target task, and the accuracy may be used as the similarity.

The loss function is a function that measures the difference between a predicted value of the model and an actual value, and more specifically, mean squared error (MSE), cross-entropy loss, and the like may be used. For example, in a regression problem, the MSE may be used to measure an error between the predicted value of the model and the actual value, and in a classification problem, the cross-entropy loss may be used to measure the difference between a predicted probability distribution of the model and an actual distribution.

Next, instructions having similarities equal to or greater than a predetermined value are selected from among the extracted instructions of the training task (S330). Here, the 'predetermined value' may be a similarity ranking, a specific score of the similarity, and the like. For example, the predetermined value may be 'the top 5th ranking or higher in similarity (similarity ranking) among the instructions of the training tasks', or 'the similarity score of 10 points or higher (specific score of similarity) among the instructions of the training tasks', and the like.

Next, the instructions of the training tasks, selected through operation S330, are output as a data set (S340). The data set may be used for training the AI model and for this purpose, may be stored in the database 200 of the system 1000.

Since an instruction includes information that defines characteristics of a task, a data set including only the selected instructions of the training tasks (i.e., a data set that does not include instances) is sufficient to train the AI model. Rather, when the training is performed with a data set that includes the instances in addition to the instructions, since there is a risk that various contents included in tasks may cause negative transfer in the training to degrade the zero-shot performance, it is necessary to select relevant tasks from the tasks.

Therefore, the present invention can provide a simple and effective method for selecting training tasks related to a target task, thereby improving computing resource utilization efficiency and enhancing the zero-shot learning capability.

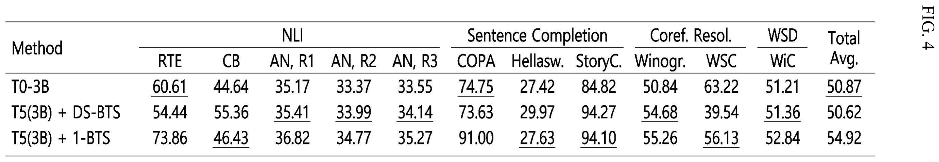

FIG. 4 shows results of evaluating the zero-shot learning performance of a case of training using a data set including both 'the instructions' and 'the instances' {T5(3B)+DS-BTS} and a case of training using a data set including only 'the instructions' of the training tasks selected according to the present invention {T5(3B) + I-BTS}. The data set used as tasks is P3 (Public Pool of Prompts) (Multitask prompted training enables zero-shot task generalization, Victor Sanh et al., 2022), and P3 includes a total of 35 tasks across 8 task clusters for training and each task includes an average of 11.7 instructions. In addition, in the evaluation results, NLI (natural language inference), Sentence Completion, Coreference Resol. (Coreference Resol.), and WSD (word sense disambiguation) are major categories of the target task, and RTE (recognizing textual entailment), CB (commonsense based), COPA (choice of plausible alternatives), and the like are subcategories of the target task.

T0(3B) represents a model trained on all data without any selection based on the similarity, T5(3B)+DS-BTS refers to a model trained by selecting the top 5 tasks with high similarities calculated by extracting some data as samples like conventional technology and using both 'the instructions' and 'the instances' included in the corresponding tasks, and T5(3B)+I-BTS refers to a model trained by selecting the top 5 tasks with high similarities like the present invention and using only 'the instructions' included in the tasks.

Looking at the scores that have evaluated the zero-shot learning performance, it is confirmed that performance scores of T5(3B)+I-BTS according to the present invention are higher than T5(3B)+DS-BTS in most tasks, and an average performance score (54.92 points) of T5(3B)+I-BTS according to the present invention is also 4.3% higher than that (50.62 points) of T5(3B)+DS-BTS.

These results show that instances in tasks may cause negative transfer in training to degrade model performance, and accordingly, training the AI model with only the instructions of the training tasks like the present invention may help improve the zero-shot performance.

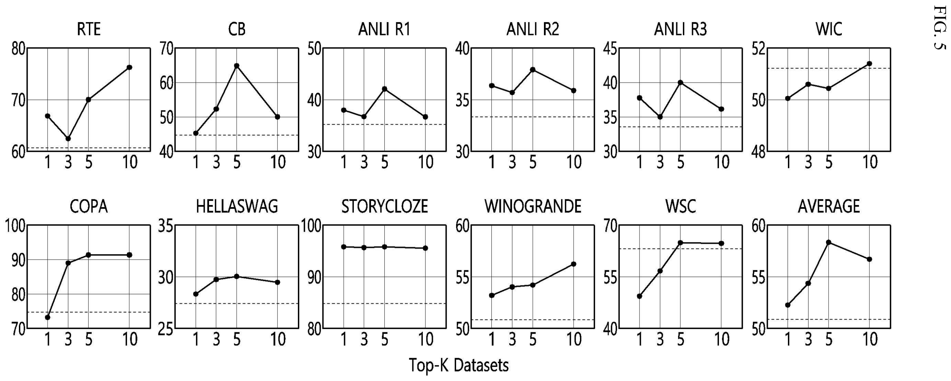

FIG. 5 shows results of evaluating zero-shot learning performance for a case in which instructions are selected based on similarities of the top nth (where n is 1, 3, 5, or 10) rank or higher when selecting instructions having similarities equal to or greater than a predetermined value among the extracted instructions of the training tasks (S330). Looking at FIG. 5, it is observed that the zero-shot learning performance gradually improves from a case of selecting the top 1st task to a case of selecting the top 5th task. However, in some tasks, a tendency in which the zero-shot learning performance decreases in a case of selecting the top 10th task is also observed. Accordingly, it is preferable to select instructions based on similarity of the top 5th rank or higher when selecting instructions based on similarity of the top nth (where n is 1, 3, 5, or 10) rank or higher, but is not limited thereto.

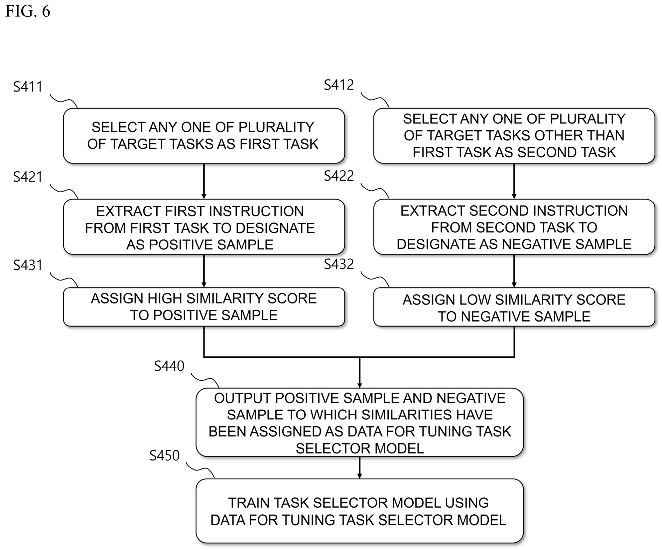

FIG. 6 is another example of a method for evaluating the similarity (operation S320 of FIG. 3) and is a block diagram for explaining a method that evaluates the similarity using a task selector model that has been pre-tuned. The task selector model may be a separate AI model that has been pre-trained for more accurate similarity evaluation.

Referring to FIG. 6, any one of a plurality of the target tasks is first selected as a first task (S411), and a first instruction is extracted from the first task to designate as a positive sample (S421). In addition, any one of the plurality of target tasks other than the first task is selected as a second task (S412), and a second instruction is extracted from the second task to designate as a negative sample (S422).

Next, a high similarity score is assigned to the positive sample (S431), and a low similarity score is assigned to the negative sample (S432). Since the positive sample is extracted from the first task, it can be considered to have a relatively high degree of similarity to the first task, and since the negative sample is extracted from another task other than the first task, it can be considered to have a relatively low degree of similarity to the first task. Accordingly, a high similarity score is assigned to the positive sample having high similarity, and a low similarity score is assigned to the negative sample having low similarity.

The similarity scores may be assigned differently depending on the user, but in one embodiment, a similarity score of "1" may be assigned to the positive sample and a similarity score of "0" may be assigned to the negative sample. As such, the similarity scores for the positive sample and negative sample may be set and assigned by the user, but are not limited thereto. For example, including the method of evaluating the similarity described above, a method of vectorizing the positive sample and negative sample and calculating the Euclidean distance, and the like between the two vectors may be used. In addition, a natural language processing-based approach that assigns scores by measuring similarity between sentences using techniques such as sentence embedding, tokenization, morphological analysis, and the like may be used. In addition, the user may additionally tune the calculated similarity scores so that a high similarity is assigned to the positive sample and a low similarity is assigned to the negative sample.

Next, the positive sample and the negative sample to which similarities have been assigned are output as data for tuning the task selector model (S440), and the task selector model is trained using the data for tuning the task selector model (S450). Since the positive sample and negative sample are assigned clearly distinguishable similarities according to the similarities of the first and second instructions respectively, training the task selector model using these may tune the task selector model to more clearly distinguish the similarity between the instruction of the target task and the instructions of the training tasks.

Therefore, according to the present invention, the similarity between instructions of the target tasks and instructions of the training tasks can be more accurately evaluated by additionally training the task selector model that evaluates the similarity, and furthermore, overall performance of the model can be improved by increasing the accuracy of training task selection.

Meanwhile, the operations of extracting the instructions (operations S311 and S312 of FIG. 3) may further include an operation of unifying placeholders included in the extracted instructions into the same sentence.

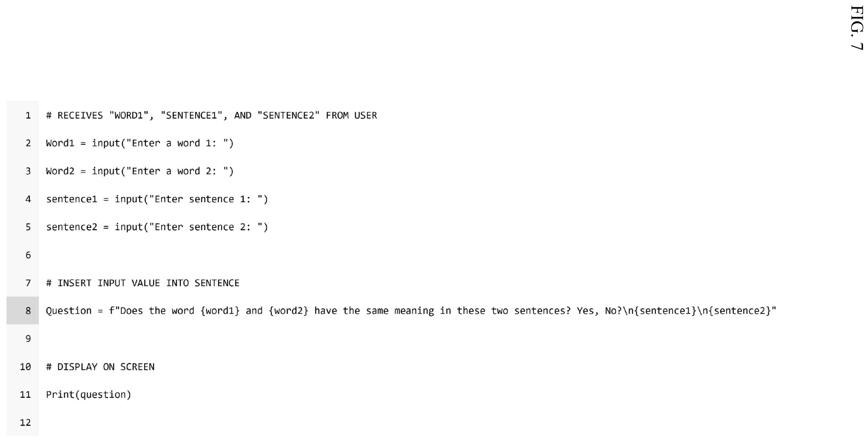

The placeholders refer to a code temporarily inserted at a location where elements such as characters, images, and the like included in data are placed. For example, data such as "question" ("Does the word {{word1}} and {{word2}} have the same meaning in these two sentences? Yes, No?\n{{sentence1}}\n{{ sentence2}}") included in the code as shown in FIG. 7 receives "word1", "word2", "sentence1", and "sentence2" that are input by the user to output completed data. Here, {{word1}}, {{word2}}, {{sentence1}}, and {{sentence2}} correspond to the placeholders that are temporarily inserted at the locations where user input values are placed.

Since the placeholder may not only have an inconsistent form but also have an unclear meaning, data including the placeholder may have a negative effect on a training process of the AI model. Accordingly, when the placeholder included in data for training the AI model are unified into a specific term, such negative effect can be removed.

For example, the placeholders may be identified and removed through data preprocessing. In FIG. 7, {{word1}} and {{word2}} included in the data may be unified into {{text}}, and {{sentence1}} and {{sentence2}} may be unified into {{candidate}}. Methods for identifying and removing the placeholders include a method of directly identifying and removing by the user, a method of identifying and removing segmented placeholders by tokenization of text, a method of identifying and removing by recognizing patterns of the placeholders, and the like, but are not limited thereto.

Therefore, according to the present invention, the negative effect of the placeholder on AI model training can be prevented by unifying the placeholder included in an extracted instruction into a specific term, thereby improving zero-shot performance.

The instruction tuning like the present invention refers to selecting training tasks related to a target task, which refers to strengthening training for an AI model and enabling efficient execution of complex tasks, and more specifically, the instruction tuning includes adjusting parameters and directives to improve the operation of AI algorithms. The instruction tuning has the advantage of improving AI training efficiency with a simple method and particularly, of generalizing an unseen task.

The training or target tasks used in the present invention and the instructions extracted therefrom may be configured to be suitable for performing in-context learning (ICL) by being classified into groups that perform the same task, thereby enabling in-depth learning for a specific domain.

In-Context Learning refers to a method of conducting learning by extracting only a portion of data included in downstream tasks and using the context, and is classified into zero-shot learning, one-shot learning, and few-shot learning. As the number of parameters of a language model has become large-scale, a large language model (LLM) may also learn through context included in examples, and accordingly, it is possible to enable the LLM to predict results by inputting several examples into the pre-trained LLM. More specifically, in-context refers to a contextual information in a prompt, which may be related to, for example, arithmetic operations, typo correction, language translation, and the like. For example, in a task of summarizing conversation content, in addition to the few-shot learning method using prompt examples, the zero-shot learning method that is controlled through instructions without prompt examples, a learning method based on fine-tuning, and the like may be utilized. Therefore, the LLM (e.g., GPT-3, HyperClova, etc.) is an excellent zero-shot or few-shot learner that is controlled through prompts, and it is possible to solve a natural language processing (NLP) problem by understanding context or patterns included in small amounts of data through prompts. Such learning method has the advantage of not requiring parameter updates and reducing computational loss.

Meanwhile, the method for constructing the data set for training the AI model through the instruction tuning according to embodiments of the present invention may be implemented by the system described with reference to FIG. 1.

The AI models according to embodiments of the present invention may be controlled, executed, trained, driven, etc. by the processor, and accordingly, at least one of the tasks of executing, training, and driving the AI models may be performed by at least one processor. In addition, the AI models may be stored in the memory, and the feature data according to the present invention may also be stored in the memory.

Meanwhile, disclosed embodiments may be implemented in the form of a recording medium in which computer-executable commands are stored. The commands may be stored in the form of program code, and when executed by the processor, program modules may be generated to perform operations of the disclosed embodiments. The recording medium may be implemented as a computer-readable recording medium.

The computer-readable recording medium includes all types of recording media in which computer-decodable commands are stored. For example, there may be a read only memory (ROM), a random access memory (RAM), a magnetic tape, a magnetic disk, a flash memory, an optical data storage device, and the like.

As described above, the disclosed embodiments have been described with reference to the accompanying drawings. Those skilled in the art to which the present disclosure pertains will understand that the present disclosure may be implemented in different forms from the disclosed embodiments without departing from the technical spirit or essential features of the present disclosure. The disclosed embodiments are illustrative and should not be construed as being limited.

**Claims**

1.  A system comprising:

    at least one processor; and a memory storing one or more commands,
    wherein the at least one processor executes the one or more commands stored in the memory to perform:

    extracting instructions from each of a training task used for training an AI model, and a target task that is a task to be trained through the training task;
    evaluating similarity by comparing the extracted instruction of the training task with the extracted instruction of the target task;
    selecting, from among the extracted instructions of the training task, instructions having similarities equal to or greater than a predetermined value; and
    outputting the selected instructions of the training task as a data set.

2.  The system of claim 1, wherein
    the evaluating of the similarity includes representing the extracted instruction of the training task and the extracted instruction of the target task as vectors, and performing evaluation through cosine similarity that compares directional similarity between the two vectors.

3.  The system of claim 1, wherein

    the evaluating of the similarity evaluates the similarity through a model transfer method,
    wherein the model transfer method includes:

    training a model transfer AI model with any one of the extracted instructions of the training task;
    inputting a plurality of the extracted instructions of the target task to the model transfer AI model to evaluate performance of the model transfer AI model; and
    assigning a high similarity to the extracted instruction of the target task for which the model transfer AI model exhibits high performance and to the extracted instruction of the training task used for training the model transfer AI model.

4.  The system of claim 1, wherein

    the evaluating of the similarity is performed by a task selector model that has been pre-tuned for evaluating the similarity,
    wherein the pre-tuning for evaluating the similarity includes:

    selecting any one of a plurality of the target tasks as a first task;
    extracting a first instruction from the first task and designating the first instruction as a positive sample;
    selecting any other one of the plurality of the target tasks other than the first task as a second task;
    extracting a second instruction from the second task and designating the second instruction as a negative sample;
    assigning similarity scores to the positive sample and the negative sample; and
    training the task selector model using the positive sample and the negative sample including the similarity scores.

5. The system of claim 4, wherein
the assigning of the similarity scores to the positive sample and the negative sample includes assigning a similarity score of "1" to the positive sample and assigning a similarity score of "0" to the negative sample.

6. The system of claim 1, wherein
the extracting of the instructions further includes unifying placeholders included in the extracted instruction of the training task and the extracted instruction of the target task into specific terms.

7. A method for generating prediction data, performed by at least one processor, comprising:

extracting instructions from each of a training task used for training an AI model, and a target task that is a task to be trained through the training task;
evaluating similarity by comparing the extracted instruction of the training task with the extracted instruction of the target task;
selecting, from among the extracted instructions of the training task, instructions having similarities equal to or greater than a predetermined value; and
outputting the selected instructions of the training task as a data set.

8. The method of claim 7, wherein
the evaluating of the similarity includes representing the extracted instruction of the training task and the extracted instruction of the target task as vectors, and performing evaluation through cosine similarity that compares directional similarity between the two vectors.

9. The method of claim 7, wherein

the evaluating of the similarity evaluates the similarity through a model transfer method,
wherein the model transfer method includes:

training a model transfer AI model with any one of the extracted instructions of the training task;
inputting a plurality of the extracted instructions of the target task to the model transfer AI model to evaluate performance of the model transfer AI model; and
assigning a high similarity to the extracted instruction of the target task for which the model transfer AI model exhibits high performance and to the extracted instruction of the training task used for training the model transfer AI model.

10. The method of claim 7, wherein

the evaluating of the similarity is performed by a task selector model that has been pre-tuned for evaluating the similarity,
wherein the pre-tuning for evaluating the similarity includes:

selecting any one of a plurality of the target tasks as a first task;
extracting a first instruction from the first task and designating the first instruction as a positive sample;
selecting any other one of the plurality of the target tasks other than the first task as a second task;
extracting a second instruction from the second task and designating the second instruction as a negative sample;
assigning similarity scores to the positive sample and the negative sample; and
training the task selector model using the positive sample and the negative sample including the similarity scores.

11. The method of claim 10, wherein
the assigning of the similarity scores to the positive sample and the negative sample includes assigning a similarity score of "1" to the positive sample and assigning a similarity score of "0" to the negative sample.

12. The method of claim 7, wherein
the extracting of the instructions further includes unifying placeholders included in the extracted instruction of the training task and the extracted instruction of the target task into specific terms.

13. A program stored in a computer-readable recording medium to execute the method of any one of claims 7 to 12 on a computer.

FIG. 1

FIG. 2

FIG. 3

FIG. 4

| Method | NLI | | | | | Sentence Completion | | | Coref. Resol. | | WSD | Total |
|---|---|---|---|---|---|---|---|---|---|---|---|---|
| | RTE | CB | AN, R1 | AN, R2 | AN, R3 | COPA | Hellasw. | StoryC. | Winogr. | WSC | WiC | Avg. |
| T0-3B | 60.61 | 44.64 | 35.17 | 33.37 | 33.55 | 74.75 | 27.42 | 84.82 | 50.84 | 63.22 | 51.21 | 50.87 |
| T5(3B) + DS-BTS | 54.44 | 55.36 | 35.41 | 33.99 | 34.14 | 73.63 | 29.97 | 94.27 | 54.68 | 39.54 | 51.36 | 50.62 |
| T5(3B) + 1-BTS | 73.86 | 46.43 | 36.82 | 34.77 | 35.27 | 91.00 | 27.63 | 94.10 | 55.26 | 56.13 | 52.84 | 54.92 |

FIG. 5

FIG. 6

S411

SELECT ANY ONE OF PLURALITY
OF TARGET TASKS AS FIRST TASK

S412

SELECT ANY ONE OF PLURALITY
OF TARGET TASKS OTHER THAN
FIRST TASK AS SECOND TASK

S421

EXTRACT FIRST INSTRUCTION
FROM FIRST TASK TO DESIGNATE
AS POSITIVE SAMPLE

S422

EXTRACT SECOND INSTRUCTION
FROM SECOND TASK TO
DESIGNATE AS NEGATIVE SAMPLE

S431

ASSIGN HIGH SIMILARITY SCORE
TO POSITIVE SAMPLE

S432

ASSIGN LOW SIMILARITY SCORE
TO NEGATIVE SAMPLE

S440

OUTPUT POSITIVE SAMPLE AND NEGATIVE
SAMPLE TO WHICH SIMILARITIES HAVE
BEEN ASSIGNED AS DATA FOR TUNING TASK
SELECTOR MODEL

S450

TRAIN TASK SELECTOR MODEL USING
DATA FOR TUNING TASK SELECTOR MODEL

FIG. 7

```
# RECEIVES "WORD1", "SENTENCE1", AND "SENTENCE2" FROM USER

Word1 = input("Enter a word 1: ")

Word2 = input("Enter a word 2: ")

sentence1 = input("Enter sentence 1: ")

sentence2 = input("Enter sentence 2: ")


# INSERT INPUT VALUE INTO SENTENCE

Question = f"Does the word {word1} and {word2} have the same meaning in these two sentences? Yes, No?\n{sentence1}\n{sentence2}"


# DISPLAY ON SCREEN

Print(question)

```

## INTERNATIONAL SEARCH REPORT

| | International application No. |
|---|---|
| | **PCT/KR2025/001944** |

**A. CLASSIFICATION OF SUBJECT MATTER**

**G06N 3/096**(2023.01)i

According to International Patent Classification (IPC) or to both national classification and IPC

**B. FIELDS SEARCHED**

Minimum documentation searched (classification system followed by classification symbols)

G06N 3/096(2023.01); G06N 3/04(2006.01); G06N 3/08(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: AI 모델(artificial intelligence model), 학습(training), 인스트럭션 튜닝(instruction tuning), 유사도(similarity), 데이터 세트(data set)

**C. DOCUMENTS CONSIDERED TO BE RELEVANT**

| Category* | Citation of document, with indication, where appropriate, of the relevant passages | Relevant to claim No. |
|---|---|---|
| DX<br>DY | KIM, Joongwon et al. TASKWEB: Selecting Better Source Tasks for Multi-task NLP. arXiv:2305.13256.<br>04 December 2023.<br>See sections 1-4, 7 and A.1; and figures 1-2. | 1-5,7-11,13<br>6,12 |
| Y | XU, Zhiyang et al. MULTIINSTRUCT: Improving Multi-Modal Zero-Shot Learning via Instruction<br>Tuning. arXiv:2212.10773. 10 June 2023.<br>See section 3.2. | 6,12 |
| A | WU, Sen et al. UNDERSTANDING AND IMPROVING INFORMATION TRANSFER IN MULTI-<br>TASK LEARNING. arXiv:2005.00944. 02 May 2020.<br>See section 3.1. | 1-13 |
| A | KUNG, Po-Nien et al. Active Instruction Tuning: Improving Cross-Task Generalization by Training on<br>Prompt Sensitive Tasks. arXiv:2311.00288. 01 November 2023.<br>See section 2.2. | 1-13 |
| A | KR 10-2024-0009845 A (SAMSUNG SDS CO., LTD.) 23 January 2024 (2024-01-23)<br>See claims 1-16. | 1-13 |

| ☐ Further documents are listed in the continuation of Box C. | ☑ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **08 May 2025** | **08 May 2025** |

| Name and mailing address of the ISA/KR | Authorized officer |
|---|---|
| **Korean Intellectual Property Office**<br>**Government Complex-Daejeon Building 4, 189 Cheongsa-**<br>**ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.

**PCT/KR2025/001944**

| Patent document cited in search report | | | Publication date (day/month/year) | Patent family member(s) | | | Publication date (day/month/year) |
|---|---|---|---|---|---|---|---|
| KR | 10-2024-0009845 | A | 23 January 2024 | US | 11977403 | B2 | 07 May 2024 |
| | | | | US | 2023-0221742 | A1 | 13 July 2023 |
| | | | | US | 2024-0020578 | A1 | 18 January 2024 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **JOEL JANG et al.** *Exploring the benefits of training expert language models over instruction tuning*, 2023

- **JOONGWON KIM et al.** *Taskweb: Selecting better 662 source tasks for multitask NLP*, 2023